# EUROPEAN PATENT SPECIFICATION

(11) **EP 4 410 470 B1**
(45) Date of publication and mention of the grant of the patent: **18.03.2026**
(21) Application number: 22874238.3
(22) Date of filing: 25.05.2022
(51) Int. Cl.: B23K 26/38, B23K 26/382, B23K 26/40, C03B 33/02, C03B 33/04, C03B 33/09, B23K 26/359, B23K 26/0622, B23K 26/16, B23K 26/364, B23K 26/402, B23K 26/70, B23K 26/146, B23K 103/00

(54) **BRITTLE MATERIAL PROCESSING METHOD**
VERFAHREN ZUR VERARBEITUNG SPRÖDER MATERIALIEN
PROCÉDÉ DE TRAITEMENT DE MATÉRIAU FRAGILE

(30) Priority: 30.09.2021 CN 202111169144
(43) Date of publication of application: 07.08.2024
(73) Proprietor: Shenzhen Jixiangyun Technology Co., Ltd., Shenzhen, Guangdong Province (CN)
(72) Inventor: HUANG, Zaifu, Shenzhen, Guangdong 518000 (CN); CHEN, Yan, Shenzhen, Guangdong 518000 (CN); GU, Yiwen, Shenzhen, Guangdong 518000 (CN); ZHANG, Yong, Shenzhen, Guangdong 518000 (CN); YANG, Lin, Shenzhen, Guangdong 518000 (CN)
(74) Representative: Valet Patent Services Limited
(86) International application number: PCT/CN2022/094893
(87) International publication number: WO 2023/050840

(56) References cited:
- CN-A- 109 304 547
- CN-A- 112 404 736
- CN-A- 113 172 354
- CN-A- 113 172 354
- CN-A- 113 814 578
- JP-A- 2006 240 948
- US-A1- 2016 280 580

## Description

### TECHNICAL FIELD

The present disclosure relates to the technical field of brittle material processing, in particular to a processing method of a brittle material.

### BACKGROUND

With development and progress of society, production technologies are constantly updated and upgraded, and processing of holes (such as round holes and irregular-shaped holes (including square holes)) on a brittle material (such as glass and other high-hardness brittle materials) has gradually converted original mechanical cutting into laser cutting, which greatly improves processing efficiency.

At present, a laser processing method of a hole structure in a brittle sheet is disclosed in a Chinese patent application No. 202110524042.5. In this laser processing method, first, a blanking hole is carved in the brittle sheet by using a first laser, so that brittle materials in the blanking hole are blanked; then, a trajectory line of a standard hole is cut in the brittle sheet by using a second laser, and a breaking guide line is cut in a breaking area; and finally, the breaking area is split along the trajectory line of the standard hole and the breaking guide line to form the standard hole of the brittle sheet.

In the laser processing method, because an edge of the blanking hole carved by the first laser has chipping (which refers to phenomenon of unevenness, curling, burrs or the like in a cutting surface of a sheet during a cutting process of the sheet due to reasons of the sheet itself and influence of a cutting tool and a cutting speed), the breaking guide line actually cut by the second laser in the breaking area will not match a preset breaking guide line, which may result in that the breaking guide line can't intersect and be connected with the trajectory line of the standard hole previously formed by cutting, and because a size of the breaking area between the trajectory line of the standard hole and the blanking hole is small with stress relatively concentrated, when laser breaking is performed, the breaking guide line is prone to be cracked outside the trajectory line of the standard hole, resulting in breaking failure and low product processing success rate.

Reference document US2016/280580A1 discloses a method for producing a contour in a planar substrate and for separating the contour from the substrate, in particular for producing an internal contour in a planar substrate and for removing the internal contour from the substrate, wherein, in a contour definition step by means of a laser beam guided over the substrate along a contour line characterising the contour to be produced, a large number of individual zones of internal damage is produced in the substrate material, in a crack definition step by means of a laser beam guided over the substrate along a plurality of crack line portions, which, viewed from the contour line, leads away at an angle a >0° , and into the contour to be separated, respectively a large number of individual zones, ..... ) of internal damage is produced in the substrate material and, in a material removal step implemented after the contour definition step and after the crack definition step by means of a material-removing laser beam guided over the substrate along a material removal line which extends along the contour line but at a spacing from the latter and also in the contour to be separated, furthermore which preferably cuts the crack line portions, the substrate material is removed over the entire substrate thickness.

Reference document CN113172354A discloses a laser processing method of a hole-shaped structure of a brittle sheet, and relates to the technical field of brittle sheet processing. The invention comprises the following processing steps: s1, presetting shapes of a standard hole and a blanking hole of a brittle sheet in a control system, wherein the size of the blanking hole is smaller than that of the standard hole, the blanking hole is positioned in the standard hole, and an area between the edge line of the blanking hole and the edge line of the standard hole is a splitting area; s2, carving blanking holes in the brittle sheet by utilizing first laser, and blanking the brittle material in the blanking holes; s3, cutting a track line of a standard hole in the brittle sheet by using second laser, and cutting a lobe lead in a lobe area; and S4, splitting the brittle sheet in the splitting area along the standard hole track line and the splitting lead to form a standard hole of the brittle sheet. The invention can process the hole-shaped structures such as round holes, square holes, special-shaped characteristic holes and the like, the size range and the shape characteristic range of the hole-shaped structures are not limited, and the edge of the cut brittle sheet has small edge breakage and excellent edge smoothness.

### SUMMARY

A main purpose of the present disclosure is to provide a processing method of a brittle material, aiming at solving a technical problem of low success rate in a processing method for a hole structure in the brittle material in related art. In order to achieve the above purpose, a processing method of a brittle material is provided in the disclosure, which includes:
cutting, by a first laser on a workpiece to be processed, a contour line of a preset standard hole and a plurality of breaking guide line groups located within the range of the contour line, one end of a breaking guide line of the breaking guide line groups being connected with the contour line and the other end of the breaking guide line extending within the contour line;
heating and pre-breaking the contour line and the breaking guide line of the breaking guide line groups on the workpiece to be processed by a second laser;
processing a blanking hole within the contour line on the workpiece to be processed by a non-thermal processing, the extended end of the breaking guide line of the breaking guide line groups extending into the blanking hole, the blanking hole being smaller than the preset standard hole in size, and being located in the preset standard hole; and
breaking along the contour line and the breaking guide line of the breaking guide line groups on the workpiece to be processed to form a standard hole in the workpiece to be processed.

In some embodiments, each of the breaking guide line groups includes two breaking guide lines, ends of the two breaking guide lines which are connected with the contour line are close to each other, and extended ends of the two breaking guide lines are away from each other.

In some embodiments, the breaking along the contour line and the breaking guide line of the breaking guide line groups on the workpiece to be processed includes:
rapidly cooling an area between the contour line and the two breaking guide lines of each of the breaking guide line groups on the workpiece to be processed, and pressurizing the area after a preset time to separate the area from the workpiece to be processed.

In some embodiments, the rapidly cooling the area between the contour line and the two breaking guide lines of each of the breaking guide line groups on the workpiece to be processed includes:
spraying quick cooling agent or low-temperature liquid nitrogen on the area between the contour line and the two breaking guide lines of each of the breaking guide line groups on the workpiece to be processed for quick cooling.

In some embodiments, the processing the blanking hole within the contour line on the workpiece to be processed by the non-thermal processing includes:
processing the blanking hole within the contour line on the workpiece to be processed by mechanical drilling.

In some embodiments, the processing the blanking hole within the contour line on the workpiece to be processed by the mechanical drilling includes:
spraying water within the contour line of the workpiece to be processed during the mechanical drilling.

In some embodiments, the mechanical drilling is electric drill drilling or machine tool drilling.

In some embodiments, the first laser is an infrared picosecond laser, an infrared femtosecond laser, a green picosecond laser, or a green femtosecond laser.

In some embodiments, the second laser is a CO₂ laser.

In some embodiments, the processing method of the brittle material further includes: cleaning a surface to be cut of the workpiece to be processed before the step of cutting the contour line of the preset standard hole and the plurality of breaking guide line groups located within the range of the contour line on the workpiece to be processed by the first laser.

Compared with the related art, the technical solution of the present disclosure has following beneficial effects:
In the processing method of the brittle materials according to the present disclosure, first, the contour line of the preset standard hole and the plurality of breaking guide line groups located within the range of the contour line are cut on the workpiece to be processed by the first laser, one end of the breaking guide line of the breaking guide line groups is connected with the contour line and the other end of the breaking guide line extends within the contour line; then the contour line and the breaking guide line of the breaking guide line groups on the workpiece to be processed are heated and pre-breaked by the second laser; the blanking hole is processed within the contour line on the workpiece to be processed by a non-thermal processing, the extended end of the breaking guide line of the breaking guide line groups extends into the blanking hole; and finally breaking is performed along the contour line and the breaking guide line of the breaking guide line groups on the workpiece to be processed to form the standard hole in the workpiece. According to the processing method of the brittle material, the breaking guide line which is cut earlier is not influenced by the chipping of the edge of the blanking hole which is processed later, and can well intersect and be connected with the contour line. Further, the contour line has certain external breaking shielding after being heated and pre-breaked, and because the blanking hole is not processed first, there's a large area within the contour line which can be used to release thermal breaking stress of the breaking guide line during the heating and pre-breaking, and thus the generated breaking guide line can be prevented from being outside the contour line, facilitating a successful subsequent breaking, with high product processing success rate.

### BRIEF DESCRIPTION OF THE DRAWINGS

FIG. 1 is a flowchart of a processing method of a brittle material according to an embodiment of the present disclosure;
FIG. 2 shows a processing sequence of processing a circular hole in a brittle material according to an embodiment of the present disclosure; and
FIG. 3 shows a processing sequence of processing a square hole in a brittle material according to an embodiment of the present disclosure.

Realization of the purposes, functional characteristics and advantages of the disclosure will be further explained in combination with embodiments and with reference to attached figures.

### DETAILED DESCRIPTION OF THE EMBODIMENTS

In the following, schemes in embodiments of the disclosure will be described clearly and completely in connection with the attached drawings of the embodiments of this disclosure.

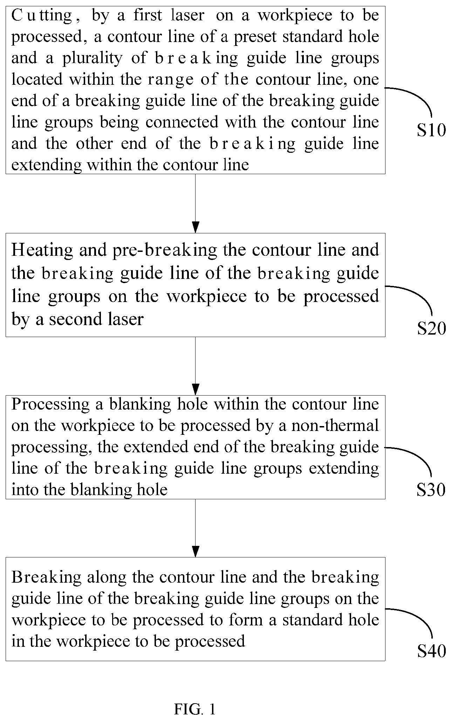

A processing method of a brittle material is provided in the disclosure, which, as shown in FIG. 1, includes steps S10 to S40.

In step S10, a contour line 1 of a preset standard hole and a plurality of breaking guide line groups located within the contour line 1 are cut on a workpiece 100 to be processed by a first laser, one end of a breaking guide line 2 of the breaking guide line groups is connected with the contour line 1 and the other end of the breaking guide line extends within the contour line 1.

In step S20, the contour line 1 and the breaking guide line 2 of the breaking guide line groups on the workpiece 100 to be processed are heated and pre-breaked by a second laser.

In step S30, a blanking hole 20 is processed within the contour line 1 on the workpiece 100 to be processed by a non-thermal processing, the extended end of the breaking guide line 2 of the breaking guide line groups extends into the blanking hole 20.

In step S40, breaking is performed along the contour line 1 and the breaking guide line 2 of the breaking guide line groups on the workpiece 100 to be processed to form a standard hole 10 in the workpiece 100 to be processed.

This embodiment provides a processing method of a brittle material to process and form a hole in the brittle material. The brittle material may be glass, but is not limited to this, and it can also be other high-hardness brittle materials. In case the brittle material is glass, the glass can be thick glass with a thickness of not less than 4 mm, such as 4 mm, 5 mm, 6 mm, 7 mm or 8 mm, and hole processing on the glass with above thicknesses can be realized by adopting the processing method according to this disclosure. Moreover, the hole processed in the brittle material may be a circular hole or an irregular hole, and the irregular hole can be a hole other than the circular hole, such as a square hole and a diamond hole.

Processing the circular hole in glass are taken as an example.

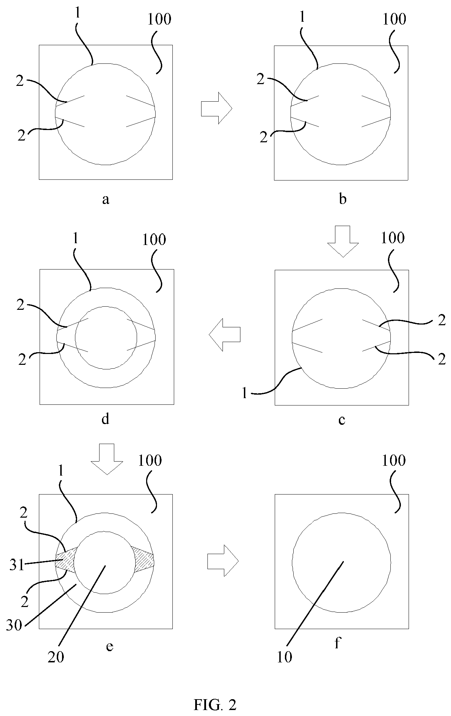

The step S10 is performed, in which a contour line 1 of a preset circular hole and a plurality of breaking guide line groups located within the contour line 1 are cut on the workpiece 100 to be processed by the first laser. A structure of the workpiece 100 to be processed in this step can be referred to a part a in FIG. 2. The number of breaking guide line groups can be set according to the number of sides of the standard hole 10, and the number of breaking guide lines 2 of the breaking guide line groups can be set according to actual situations. For the processing of the circular hole, there are two breaking guide line groups, which are opposite to each other, one end of a breaking guide line 2 of each of the two breaking guide line groups is connected with the contour line 1, and the other end of the breaking guide line extends within the contour line 1.

The step S20 is performed, in which the contour line 1 and the breaking guide line 2 of the breaking guide line groups on the workpiece 100 to be processed are heated and pre-breaked by the second laser. A structure of the workpiece 100 to be processed in this step can be referred to parts b and c in FIG. 2.

The step S30 is performed, in which a blanking hole 20 is processed within the contour line 1 on the workpiece 100 to be processed by a non-thermal processing, and the extended end of the breaking guide line 2 of the breaking guide line groups extends into the blanking hole 20. A structure of the workpiece 100 to be processed in this step can be referred to a part d in FIG. 2. The blanking hole 20 is smaller than the standard hole 10 in size, and is located in the circular hole. A breaking area 30 is defined between an edge line of the blanking hole 20 and the contour line 1 of the circular hole, and the breaking guide line 2 of the breaking guide line group is within the breaking area 30, with its extended end extending into the blanking hole 20. The blanking hole 20 may or may not correspond to the standard hole 10 in shape. For example, the blanking hole 20 is a circular hole corresponding to the standard hole 10.

The step S40 is performed, in which breaking is performed along the contour line 1 and the breaking guide line 2 of the breaking guide line groups on the workpiece 100 to be processed to form the circular hole in the workpiece 100 to be processed. A structure of the workpiece 100 to be processed in this step can be referred to parts e and f in FIG. 2.

Processing the square hole in glass are taken as an example.

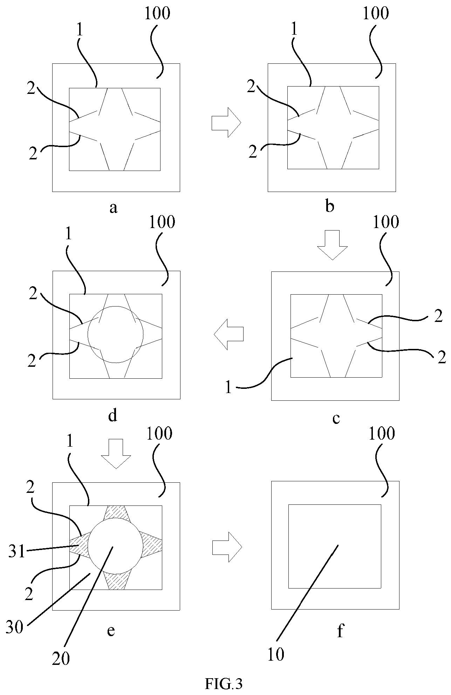

The step S10 is performed, in which a contour line 1 of a preset square hole and a plurality of breaking guide line groups located within the contour line 1 are cut on the workpiece 100 to be processed by the first laser. A structure of the workpiece 100 to be processed in this step can be referred to a part a in FIG. 3. A number of breaking guide line groups can be set according to a number of sides of the standard hole 10, and a number of breaking guide lines 2 of the breaking guide line groups can be set according to actual situations. For the processing of the square hole, there are four breaking guide line groups, which correspond to four sides of the square hole, one end of a breaking guide line 2 of each of the four breaking guide line groups is connected with the contour line 1, and the other end of the breaking guide line extends within the contour line 1.

The step S20 is performed, in which the contour line 1 and the breaking guide line groups on the workpiece 100 to be processed are heated and pre-breaked by the second laser to correspondingly generate the contour line 1 and the breaking guide line groups. A structure of the workpiece 100 to be processed in this step can be referred to parts b and c in FIG. 3.

The step S30 is performed, in which a blanking hole 20 is processed within the contour line 1 on the workpiece 100 to be processed by a non-thermal processing, the extended end of the breaking guide line 2 of the breaking guide line groups extends into the blanking hole 20. A structure of the workpiece 100 to be processed in this step can be referred to a part d in FIG. 3. The blanking hole 20 is smaller than the standard hole 10 in size, and is located in the square hole. A breaking area 30 is defined between an edge line of the blanking hole 20 and the contour line 1 of the square hole, and the breaking guide line 2 of the breaking guide line group is within the breaking area 30, with its extended end extending into the blanking hole 20. The blanking hole 20 may or may not correspond to the standard hole 10 in shape. For example, the blanking hole 20 is a circular hole not corresponding to the standard hole 10.

The step S40 is performed, in which breaking is performed along the contour line 1 and the breaking guide line groups on the workpiece 100 to be processed to form the square hole in the workpiece 100 to be processed. A structure of the workpiece 100 to be processed in this step can be referred to parts e and f in FIG. 3.

In step S10 of this embodiment, a hole shape and size of the standard hole 10 to be processed can be preset in a laser cutting system. The first laser is configured for cutting, and preferably an ultra-fast laser, such as an infrared laser or a green laser. The ultra-fast laser has short pulse time, high peak energy, less thermal influence in material processing, and higher cutting edge quality of brittle materials. Further, a laser cutting apparatus is preferably a laser cutting mechanism with a XYZ driving module and an ultra-fast laser. The ultra-fast laser is equipped with a Bessel cutting head to realize emission of the first laser, and a structural size and shape of the hole that can be processed by the laser cutting apparatus are not limited. A Bessel focused beam produced by the Bessel cutting head has a small diameter and long focal depth, and a brittle material cut by the Bessel focused beam has a small edge taper and good edge quality.

In the step S20 of this embodiment, when the breaking guide line 2 of the breaking guide line groups is heated, the breaking guide line 2 of the breaking guide line groups does not extend outside the contour line 1, but just intersects with it, so that subsequent breaking quality can be ensured. That is, when viewed from front and back sides of the glass, breaking guide lines of the breaking guide line groups all intersect with the contour line 1, and when an intersection line is viewed from an oblique side of the glass, a part of breaking guide lines 2 of the glass can be seen bright. The second laser is configured for heating, and preferably a CO₂ laser.

In the step S30 of this embodiment, the blanking hole 20 is processed within the contour line by the non-thermal processing, and the brittle material in the blanking hole 20 is blanked first, so that internal stress within the contour line 1 can be removed. There are many non-thermal machining methods, such as mechanical drilling and waterjet cutting, which can be selected according to actual situations. The blanking hole 20 processed by the non-thermal processing may not affect the previously generated breaking guide line 2, which can ensure breaking efficiency and breaking quality. However, if laser cutting and other thermal processing methods are used to process the blanking hole 20, a melt flow at an edge of the blanking hole 20 is prone to reflow and block the breaking guide line 2, then the breaking guide line 2 needs to be heated to be pre-breaked again, which affects the breaking efficiency and quality.

In the step S40 of this embodiment, there may be various methods of breaking, such as mechanically pressing the breaking area 30 to split the breaking area 30 along the contour line 1 and the breaking guide line 2, and the standard hole 10 is formed finally after the brittle material of the breaking area 30 is blanked. Of course, this is only exemplary but not limiting.

In this embodiment, in processes of laser cutting, laser heating, processing of the standard hole, breaking, etc., an area outside the contour line of the standard hole of the workpiece 100 to be processed is fixed. The first laser and the second laser can be integrated into one laser device or be in two separate laser devices, which can be selected according to actual situations.

Based on implementation of the steps S10 to S40, in the processing method of the brittle material, the breaking guide line 2 which is cut earlier is not influenced by the chipping of the edge of the blanking hole 20 which is processed later, and can well intersect and be engaged with the contour line 1. Further, the contour line 1 has certain external breaking shielding after being heated and pre-breaked, and because the blanking hole 20 is not processed first, there's a large area within the contour line which can be used to release thermal breaking stress of the breaking guide line 2 during the heating and pre-breaking, and thus the generated breaking guide line 2 can be prevented from being outside the contour line 1, facilitating a successful subsequent breaking, with high product processing success rate.

In some embodiments, each of the breaking guide line groups includes two breaking guide lines 2, ends of the two breaking guide lines 2 which are connected with the contour line 1 are close to each other, and extended ends of the two breaking guide lines 2 are away from each other. In this embodiment, referring to FIG. 2 and FIG. 3, the breaking guide line group consists of two breaking guide lines 2, which form a "V" shape. Ends of the two breaking guide lines 2 which are connected with the contour line 1 are close to each other, and extended ends of the two breaking guide lines 2 are away from each other. Subsequent formation of the blanking hole 20 can break the stress of the brittle material within the contour line 1, and the "V" shape formed by the two breaking guide lines 2 can make stress in an area between the two breaking guide lines 2 radially towards the blanking hole 20, which facilitates stress release during subsequent breaking, and blanking can be rapidly realized in a breaking process.

In some embodiments, the step in which the breaking is performed along the contour line 1 and the breaking guide line 2 of the breaking guide line groups on the workpiece 100 to be processed includes:
rapidly cooling an area between the contour line 1 and the two breaking guide lines 2 of each of the breaking guide line groups on the workpiece 100 to be processed, and pressurizing the area after a preset time to separate the area from the workpiece to be processed.

In this embodiment, by rapid cooling, the area (that is, a small pre-blanking area 31 as shown in FIGS. 2 and 3) between the contour line 1 and the two breaking guide lines 2 of each of the breaking guide line groups on the workpiece 100 to be processed gradually shrinks inward due to low temperature, while an area outside the contour line 1 gradually shrinks inward due to heat diffusion, so that the workpiece 100 to be processed splits at the contour line 1 and the two breaking guide lines 2 of each of the breaking guide line groups. Then, after a preset time (e.g., 3 to 6 seconds), the area (that is, the small pre-blanking area 31 shown in FIGS. 2 and 3) between the contour line 1 and the two breaking guide lines 2 of each of the breaking guide line groups on the workpiece 100 to be processed is pressurized, so that the brittle material within this area can be separated from the workpiece to be processed, and a remaining area of the breaking area 30 may fall directly and automatically due to gravity, thus completing the breaking. There are many ways to pressurize, such as knocking or high-pressure water impact, which includes but is not limited to this. In this embodiment, the brittle material can be split with high efficiency and high quality by means of rapid cooling and pressurizing.

In some embodiments, the step of rapidly cooling the area between the contour line 1 and the two breaking guide lines 2 of each of the breaking guide line groups on the workpiece 100 to be processed includes:
spraying quick cooling agent or low-temperature liquid nitrogen on the area between the contour line 1 and the two breaking guide lines 2 of each of the breaking guide line groups on the workpiece 100 to be processed for quick cooling.

In this embodiment, the area between the contour line 1 and the two breaking guide lines 2 of each of the breaking guide line groups on the workpiece 100 to be processed is rapidly cooled by spraying the quick cooling agent or low-temperature liquid nitrogen, which facilitates operation with a fast cooling speed. Of course, in addition, other preparations that can serve to quickly cool down can be used, which can be selected according to actual situations.

In some embodiments, the step in which the blanking hole 20 is processed within the contour line 1 on the workpiece 100 to be processed by the non-thermal processing includes:
processing the blanking hole 20 within the contour line 1 on the workpiece 100 to be processed by mechanical drilling.

In this embodiment, the blanking hole 20 processed by the mechanical drilling has small edge chipping and good smoothness.

In some embodiments, the step of processing the blanking hole 20 within the contour line 1 on the workpiece 100 to be processed by the mechanical drilling includes:
spraying water within the contour line 1 of the workpiece 100 to be processed during the mechanical drilling.

In this embodiment, during the mechanical drilling, heat is absorbed by sprayed water, which can ensure that the workpiece 100 to be processed is not heated up due to friction, avoids explosion of the workpiece 100 to be processed, and further improves product processing success rate. In addition, dust generated during the mechanical drilling can be washed away by spraying water, which ensures cleanliness of the surface of the workpiece 100 to be processed, facilitates subsequent breaking and improves breaking quality.

Further, the mechanical drilling is electric drill drilling or machine tool drilling. In this embodiment, the electric drill or the machine tool is adopted, which has good drilling effect and can be conveniently operated.

In some embodiments, the first laser is an infrared picosecond laser, an infrared femtosecond laser, a green picosecond laser, or a green femtosecond laser. In the step S10, an ultra-fast laser is used as the first laser, and specifically any one of an infrared picosecond laser, an infrared femtosecond laser, a green picosecond laser, and a green femtosecond laser can be adopted, and an edge of the standard hole 10 of the processed brittle material has almost no edge chipping, with good edge smoothness.

In some embodiments, the second laser is a CO₂ laser. In step S20, the CO₂ laser is used as the second laser, which has good heating and pre-breaking effect.

In some embodiments, the processing method of the brittle material further includes step S50 before the step S10.

In the step S50, a surface to be cut of the workpiece 100 to be processed is cleaned.

In this embodiment, by cleaning the surface to be cut of the workpiece 100 to be processed, the surface to be cut is free of dirt and dust, thus with no influence on cutting of the first laser, which ensures the cutting of contour line 1 and the breaking guide line 2 that penetrates the workpiece 100 to be processed, thus avoiding the edge chipping of the workpiece 100 to be processed during heating and pre-breakedting, and improving the blanking success rate and yield. For example, after the contour line 1 of the standard hole 10 and the breaking guide line groups are cut on the glass, the glass can be inspected. When viewed from a transparent side of the glass, if a semi-transparent line meets an upper surface and a lower surface of the glass without any breaks, it can be determined that the laser cutting penetrates the glass.

It should be noted that technical schemes of respective embodiments of the disclosure can be combined with each other, which must be based on enabling of realization by an ordinary skilled in the art.

## Claims

1. A processing method of a brittle material, comprising:
S10, cutting, by a first laser on a workpiece (100) to be processed, a contour line (1) of a preset standard hole and a plurality of breaking guide line groups located within the range of the contour line (1), one end of a breaking guide line (2) of the breaking guide line groups being connected with the contour line (1) and the other end of the breaking guide line (2) extending within the contour line (1);
S20, heating and pre-breaking the contour line (1) and the breaking guide line (2) of the breaking guide line groups on the workpiece (100) to be processed by a second laser;
S30, processing a blanking hole (20) within the range of the contour line (1) on the workpiece (100) to be processed by a non-thermal processing, the extended end of the breaking guide line (2) of the breaking guide line groups extending into the blanking hole (20), the blanking hole (20) being smaller than the preset standard hole in size, and being located in the preset standard hole; and
S40, breaking along the contour line (1) and the breaking guide line (2) of the breaking guide line groups on the workpiece (100) to be processed to form a standard hole (10) in the workpiece (100) to be processed.

2. The processing method of the brittle material according to claim 1, wherein each of the breaking guide line groups comprises two breaking guide lines (2), ends of the two breaking guide lines (2) which are connected with the contour line (1) being close to each other and extended ends of the two breaking guide lines (2) being away from each other.

3. The processing method of the brittle material according to claim 2, wherein the breaking along the contour line (1) and the breaking guide line (2) of the breaking guide line groups on the workpiece (100) to be processed comprises:
rapidly cooling an area between the contour line (1) and the two breaking guide lines (2) of each of the breaking guide line groups on the workpiece (100) to be processed, and pressurizing the area after a preset time to separate the area from the workpiece (100) to be processed.

4. The processing method of the brittle material according to claim 3, wherein the rapidly cooling the area between the contour line (1) and the two breaking guide lines (2) of each of the breaking guide line groups on the workpiece (100) to be processed comprises:
spraying quick cooling agent or low-temperature liquid nitrogen on the area between the contour line (1) and the two breaking guide lines (2) of each of the breaking guide line groups on the workpiece (100) to be processed for quick cooling.

5. The processing method of the brittle material according to claim 1, wherein the processing the blanking hole (20) within the contour line (1) on the workpiece (100) to be processed by the non-thermal processing comprises:
processing the blanking hole (20) within the contour line (1) on the workpiece (100) to be processed by mechanical drilling.

6. The processing method of the brittle material according to claim 5, wherein the processing the blanking hole (20) within the contour line (1) on the workpiece (100) to be processed by the mechanical drilling comprises:
spraying water within the contour line (1) of the workpiece (100) to be processed during the mechanical drilling.

7. The processing method of the brittle material according to claim 5, wherein the mechanical drilling is electric drill drilling or machine tool drilling.

8. The processing method of the brittle material according to claim 1, wherein the first laser is an infrared picosecond laser, an infrared femtosecond laser, a green picosecond laser, or a green femtosecond laser.

9. The processing method of the brittle material according to claim 1, wherein the second laser is a CO₂ laser.

10. The processing method of the brittle material according to claim 1, wherein before the step of cutting, by the first laser on the workpiece (100) to be processed, the contour line (1) of the preset standard hole and the plurality of breaking guide line groups located within the range of the contour line (1), the processing method further comprises:
cleaning a cutting surface of the workpiece (100) to be processed.

## Patentansprüche

1. Verfahren zur Bearbeitung eines spröden Materials, umfassend:
S10, Schneiden einer Konturlinie (1) eines vorgegebenen Standardloches und mehrerer innerhalb des Bereichs der Konturlinie (1) liegender Bruchführungsliniengruppen durch einen ersten Laser auf einem zu bearbeitenden Werkstück (100), wobei ein Ende einer Bruchführungslinie (2) der Bruchführungsliniengruppen mit der Konturlinie (1) verbunden ist und das andere Ende der Bruchführungslinie (2) innerhalb der Konturlinie (1) verläuft;
S20, Erwärmen und Vorbrechen der Konturlinie (1) und der Bruchführungslinie (2) der Bruchführungsliniengruppen auf dem zu bearbeitenden Werkstück (100) durch einen zweiten Laser;
S30, Bearbeiten eines Ausbruchlochs (20) innerhalb des Bereichs der Konturlinie (1) auf dem zu bearbeitenden Werkstück (100) durch ein nicht-thermisches Bearbeitungsverfahren, wobei das verlängerte Ende der Bruchführungslinie (2) der Bruchführungsliniengruppe in das Ausbruchloch (20) hineinreicht, wobei das Ausbruchloch (20) in der Größe kleiner als das vorgegebene Standardloch ist und sich innerhalb des vorgegebenen Standardlochs befindet; und
S40, Brechen entlang der Konturlinie (1) und der Bruchführungslinie (2) der Bruchführungsliniengruppen auf dem zu bearbeitenden Werkstück (100), um ein Standardloch (10) in dem zu bearbeitenden Werkstück (100) zu bilden.

2. Verfahren zur Bearbeitung eines spröden Materials nach Anspruch 1, wobei jede der Bruchführungsliniengruppen zwei Bruchführungslinien (2) aufweist, wobei die Enden der beiden Bruchführungslinien (2), die mit der Konturlinie (1) verbunden sind, nahe beieinander liegen und die verlängerten Enden der beiden Bruchführungslinien (2) voneinander entfernt sind.

3. Verfahren zur Bearbeitung eines spröden Materials nach Anspruch 2, wobei das Brechen entlang der Konturlinie (1) und der Bruchführungslinie (2) der Bruchführungsliniengruppen auf dem zu bearbeitenden Werkstück (100) umfasst:
schnelles Abkühlen eines Bereichs zwischen der Konturlinie (1) und den zwei Bruchführungslinien (2) jeder der Bruchführungsliniengruppen auf dem zu bearbeitenden Werkstück (100) und Druckbeaufschlagen des Bereichs nach einer vorgegebenen Zeit, um den Bereich vom zu bearbeitenden Werkstück (100) abzutrennen.

4. Verfahren zur Bearbeitung eines spröden Materials nach Anspruch 3, wobei das schnelle Abkühlen des Bereichs zwischen der Konturlinie (1) und den zwei Bruchführungslinien (2) jeder der Bruchführungsliniengruppen auf dem zu bearbeitenden Werkstück (100) umfasst:
Besprühen eines Schnellkühlmittels oder flüssigen Stickstoffs niedriger Temperatur auf den Bereich zwischen der Konturlinie (1) und den zwei Bruchführungslinien (2) jeder der Bruchführungsliniengruppen auf dem zu bearbeitenden Werkstück (100) zur schnellen Abkühlung.

5. Verfahren zur Bearbeitung eines spröden Materials nach Anspruch 1, wobei das Bearbeiten eines Ausbruchlochs (20) innerhalb der Konturlinie (1) auf dem zu bearbeitenden Werkstück (100) durch ein nicht-thermisches Bearbeitungsverfahren umfasst:
Bearbeiten des Ausbruchlochs (20) innerhalb der Konturlinie (1) auf dem zu bearbeitenden Werkstück (100) durch mechanisches Bohren.

6. Verfahren zur Bearbeitung eines spröden Materials nach Anspruch 5, wobei das Bearbeiten des Ausbruchlochs (20) innerhalb der Konturlinie (1) auf dem zu bearbeitenden Werkstück (100) durch mechanisches Bohren umfasst:
Besprühen von Wasser innerhalb der Konturlinie (1) des zu bearbeitenden Werkstücks (100) während des mechanischen Bohrens.

7. Verfahren zur Bearbeitung eines spröden Materials nach Anspruch 5, wobei das mechanische Bohren ein elektrisches bohren oder ein Bohren mit einer Werkzeugmaschine ist.

8. Verfahren zur Bearbeitung eines spröden Materials nach Anspruch 1, wobei der erste Laser ein Infrarot-Pikosekundenlaser, ein Infrarot-Femtosekundenlaser, ein grüner Pikosekundenlaser oder ein grüner Femtosekundenlaser ist.

9. Verfahren zur Bearbeitung eines spröden Materials nach Anspruch 1, wobei der zweite Laser ein CO2-Laser ist.

10. Verfahren zur Bearbeitung eines spröden Materials nach Anspruch 1, wobei vor dem Schritt des Schneidens einer Konturlinie (1) eines vorgegebenen Standardloches und mehrerer innerhalb des Bereichs der Konturlinie (1) liegender Bruchführungsliniengruppen durch den ersten Laser auf dem zu bearbeitenden Werkstück (100) das Verfahren weiter umfasst:
Reinigen einer Schnittfläche des zu bearbeitenden Werkstücks (100).

## Revendications

1. Procédé de traitement d'un matériau fragile, comprenant :
S10, découper, à l'aide d'un premier laser sur une pièce d'ouvrage (100) à traiter, une ligne de contour (1) d'un trou standard prédéfini et une pluralité de groupes de lignes de guidage de cassure situées à l'intérieur de la ligne de contour (1), une extrémité d'une ligne de guidage de cassure (2) des groupes de lignes de guidage de cassure étant reliée à la ligne de contour (1) et
l'autre extrémité de la ligne de guidage de cassure (2) s'étendant à l'intérieur de la ligne de contour (1) ;
S20, chauffer et pré-casser la ligne de contour (1) et la ligne de guidage de cassure (2) des groupes de lignes de guidage de cassure sur la pièce d'ouvrage (100) à traiter à l'aide d'un second laser ;
S30, traiter un trou de poinçonnage (20) dans la plage de la ligne de contour (1) sur la pièce d'ouvrage (100) à traiter selon un processus non thermique, l'extrémité étendue de la ligne de guidage de cassure (2) des groupes de lignes de guidage de cassure s'étendant à l'intérieur du trou de poinçonnage (20), le trou de poinçonnage (20) étant plus petit en taille que le trou standard prédéfini, et étant situé dans le trou standard prédéfini ; et
S40, casser le long de la ligne de contour (1) et de la ligne de guidage de cassure (2) des groupes de lignes de guidage de cassure sur la pièce d'ouvrage (100) à traiter pour former un trou standard (10) dans la pièce d'ouvrage (100) à traiter.

2. Procédé de traitement du matériau fragile selon la revendication 1, dans lequel chacun des groupes de lignes de guidage de cassure comprend deux lignes guides de cassure (2), des extrémités des deux lignes guides de cassure (2) qui sont reliées à la ligne de contour (1) étant proches les unes des autres et les extrémités étendues des deux lignes guides de cassure (2) s'éloignant les unes des autres.

3. Procédé de traitement du matériau fragile selon la revendication 2, dans lequel l'étape de casser le long de la ligne de contour (1) et de la ligne de guidage de cassure (2) des groupes de lignes de guidage de cassure sur la pièce d'ouvrage (100) à traiter comprend :
refroidir rapidement une zone entre la ligne de contour (1) et les deux lignes de guidage de cassure (2) de chacun des groupes de lignes de guidage de cassure sur la pièce d'ouvrage (100) à traiter, et pressuriser la zone à la fin d'un temps prédéfini pour séparer la zone de la pièce d'ouvrage (100) à traiter.

4. Procédé de traitement du matériau fragile selon la revendication 3, dans lequel l'étape de refroidir rapidement la zone entre la ligne de contour (1) et les deux lignes de guidage de cassure (2) de chacun des groupes de lignes de guidage de cassure sur la pièce d'ouvrage (100) à traiter comprend :
pulvériser un agent de refroidissement rapide ou de l'azote liquide à basse température sur la zone entre la ligne de contour (1) et les deux lignes de guidage de cassure (2) de chacun des groupes de lignes de guidage de cassure sur la pièce d'ouvrage (100) à traiter pour un refroidissement rapide.

5. Procédé de traitement du matériau fragile selon la revendication 1, dans lequel l'étape de traiter le trou de poinçonnage (20) à l'intérieur de la ligne de contour (1) sur la pièce d'ouvrage (100) à traiter selon le processus non thermique comprend :
traiter le trou de poinçonnage (20) à l'intérieur de la ligne de contour (1) sur la pièce d'ouvrage (100) à traiter par un perçage mécanique.

6. Procédé de traitement du matériau fragile selon la revendication 5, dans lequel l'étape de traiter le trou de poinçonnage (20) à l'intérieur de la ligne de contour (1) sur la pièce d'ouvrage (100) à traiter par le perçage mécanique comprend :
pulvériser de l'eau à l'intérieur de la ligne de contour (1) de la pièce d'ouvrage (100) à traiter pendant le perçage mécanique.

7. Procédé de traitement du matériau fragile selon la revendication 5, dans lequel le perçage mécanique est un perçage à perceuse électrique ou un perçage à machine-outil.

8. Procédé de traitement du matériau fragile selon la revendication 1, dans lequel le premier laser est un laser à picoseconde infrarouge, un laser à femtoseconde infrarouge, un laser à picoseconde vert ou un laser à femtoseconde vert.

9. Procédé de traitement du matériau fragile selon la revendication 1, dans lequel le second laser est un laser CO₂.

10. Procédé de traitement du matériau fragile selon la revendication 1, dans lequel, avant l'étape de découper, à l'aide du premier laser sur une pièce d'ouvrage (100) à traiter, la ligne de contour (1) du trou standard prédéfini et la pluralité de groupes de lignes de guidage de cassure situées à l'intérieur de la ligne de contour (1), le procédé de traitement comprend en outre :
nettoyer une surface de découpe de la pièce d'ouvrage (100) à traiter.
